# EUROPEAN PATENT APPLICATION

(11) **EP 4 671 226 A1**
(43) Date of publication of application: **31.12.2025**
(21) Application number: 24760413.5
(22) Date of filing: 21.02.2024
(51) Int. Cl.: C04B 35/447

(54) **STRUCTURE AND PRODUCTION METHOD FOR SAME**

(30) Priority: 24.02.2023 JP 2023027739
(71) Applicant: Panasonic Intellectual Property Management Co., Ltd., Kadoma-shi, Osaka 571-0057 (JP)
(72) Inventor: SEKINO, Tohru, Suita-shi, Osaka 565-0871 (JP); SEO, Yeongjun, Suita-shi, Osaka 565-0871 (JP); CHO, Sunghun, Suita-shi, Osaka 565-0871 (JP); GOTO, Tomoyo, Suita-shi, Osaka 565-0871 (JP); SAWA, Ryosuke, Kadoma-shi, Osaka 571-0057 (JP); KURIZOE, Naoki, Kadoma-shi, Osaka 571-0057 (JP); SATO, Natsuki, Kadoma-shi, Osaka 571-0057 (JP); YOSHIOKA, Tatsuro, Kadoma-shi, Osaka 571-0057 (JP)
(74) Representative: Müller-Boré & Partner Patentanwälte PartG mbB
(86) International application number: PCT/JP2024/006340
(87) International publication number: WO 2024/177115

(57) **Abstract**

A structure (1) includes: a plurality of crystal particles (2) including a calcium phosphate compound; and a coupling portion (3) that couples each of the crystal particles (2) and includes a calcium phosphate compound. An average particle size of the crystal particles (2) is 60 nm or less. A relative density of the structure (1) is 80% or more. When a thickness of the structure (1) is 1 mm, a total light transmittance of light having a wavelength of 589 nm is 45% or more. A Vickers hardness of the structure (1) is 1 GPa or more.

## Description

### TECHNICAL FIELD

The present invention relates to a structure and a method of producing a structure.

### BACKGROUND ART

A sintering method is known as a method of producing an inorganic member made of ceramics. The sintering method is a method in which a sintered body is obtained by heating an aggregate of solid powders made of inorganic materials at a temperature lower than the melting point. However, the sintering method has problems that energy consumption during production is large, and costs are high, because it is necessary to heat solid powders at a high temperature. Therefore, the development of a method of coupling solid powders made of inorganic materials at a low temperature is being undertaken.

Patent Literature 1 discloses a calcium phosphate transparent body obtained by placing a dispersion in a stationary position and drying the dispersion at a temperature which is higher than the freezing point of a solvent and which is equal to or lower than a temperature that is 100°C higher than the boiling point of the solvent. The dispersion is obtained by dispersing calcium phosphate in the solvent. When the calcium phosphate transparent body is a 500 µm thick film, the transmittance of visible light is in a range of 30% or more and 100% or less.

### CITATION LIST

### PATENT LITERATURE

Patent Literature 1: JP 2007-246299 A

### SUMMARY OF INVENTION

However, there is a risk that the calcium phosphate transparent body disclosed in Patent Literature 1 may not have sufficient mechanical strength.

The present invention has been devised in view of the problem of the prior art. An object of the present invention is to provide a structure having excellent mechanical strength and translucency, and a method of producing a structure which can be produced under low-temperature conditions.

In order to solve the above problem, a structure according to a first aspect of the present invention includes: a plurality of crystal particles including a calcium phosphate compound; and a coupling portion that couples each of the crystal particles and includes a calcium phosphate compound. An average particle size of the crystal particles is 60 nm or less. A relative density of the structure is 80% or more. When a thickness of the structure is 1 mm, a total light transmittance of light having a wavelength of 589 nm is 45% or more. A Vickers hardness of the structure is 1 GPa or more.

A method of producing a structure according to a second aspect of the present invention includes: a step of pressurizing and heating a mixture for 20 minutes or longer and 12 hours or shorter under conditions where a pressure is 3000 MPa or less, and a temperature is 300°C or lower, the mixture containing a raw material particle having an average particle size of 60 nm or less and containing a crystal of a calcium phosphate compound, and an aqueous solution containing calcium and phosphorus and having a pH of 4.0 or more. A relative density of the structure is 80% or more. When a thickness of the structure is 1 mm, a total light transmittance of light having a wavelength of 589 nm is 45% or more, and a Vickers hardness of the structure is 1 GPa or more.

### BRIEF DESCRIPTION OF DRAWINGS

[FIG. 1] FIG. 1 is a cross sectional view schematically showing an example of a structure according to the present embodiment.
[FIG. 2] FIG. 2 is a schematic view showing a state in which an aqueous solution exists between adjacent crystal particles in a step of producing the structure.
[FIG. 3] FIG. 3 is a schematic view showing a state in which a coupling portion is formed between adjacent crystal particles.
[FIG. 4] FIG. 4 is a graph showing the relationship between the heating time of raw material particles and the relative density of a structure.
[FIG. 5] FIG. 5 is a graph showing the relationship between wavelengths and total light transmittances of structures according to examples.
[FIG. 6] FIG. 6 is a graph showing the relationship between the heating time of raw material particles and the Vickers hardness and fracture toughness of a structure.
[FIG. 7] FIG. 7 is a graph showing the relationship between the heating time of raw material particles and the biaxial flexural strength and Young's modulus of a structure.
[FIG. 8] FIG. 8 shows an SEM image in which raw material particles used in examples are observed at a magnification of 200,000.
[FIG. 9] FIG. 9 shows an SEM image in which a cross section of a structure according to Example 1 is observed at a magnification of 30,000.
[FIG. 10] FIG. 10 shows an SEM image in which the cross section of the structure according to Example 1 is observed at a magnification of 70,000.
[FIG. 11] FIG. 11 shows an SEM image in which a cross section of a structure according to Example 2 is observed at a magnification of 30,000.
[FIG. 12] FIG. 12 shows an SEM image in which the cross section of the structure according to Example 2 is observed at a magnification of 70,000.
[FIG. 13] FIG. 13 shows an SEM image in which a cross section of a structure according to Example 3 is observed at a magnification of 30,000.
[FIG. 14] FIG. 14 shows an SEM image in which the cross section of the structure according to Example 3 is observed at a magnification of 70,000.
[FIG. 15] FIG. 15 shows an SEM image in which a cross section of a structure according to Example 4 is observed at a magnification of 30,000.
[FIG. 16] FIG. 16 shows an SEM image in which the cross section of the structure according to Example 4 is observed at a magnification of 70,000.
[FIG. 17] FIG. 17 shows a TEM image obtained by observing raw material particles used in an example.
[FIG. 18] FIG. 18 shows a TEM image obtained by observing the cross section of the structure according to Example 1.
[FIG. 19] FIG. 19 shows a TEM image obtained by observing the cross section of the structure according to Example 4.
[FIG. 20] FIG. 20 shows a TEM image in which the cross section of the structure according to Example 4 is observed by further magnifying the cross section.
[FIG. 21] FIG. 21 shows an SEM image in which the cross section of the structure according to Example 1 is observed at a magnification of 30,000.
[FIG. 22] FIG. 22 shows an SEM image in which the cross section of the structure according to Example 1 is observed at a magnification of 100,000.
[FIG. 23] FIG. 23 shows an SEM image in which a cross section of a structure according to a comparative example is observed at a magnification of 30,000.
[FIG. 24] FIG. 24 shows an SEM image in which the cross section of the structure according to the comparative example is observed at a magnification of 100,000.
[FIG. 25] FIG. 25 is a graph showing the relationship between the heating time of raw material particles and the aspect ratio of raw material particles.
[FIG. 26] FIG. 26 is a graph showing X-ray diffraction patterns of the structures according to Examples 1 to 4.
[FIG. 27] FIG. 27 is a graph showing an X-ray diffraction pattern of raw material particles used in an example and the X-ray diffraction pattern of the structure according to Example 4.

### DESCRIPTION OF EMBODIMENTS

A structure and a method of producing a structure according to the present embodiment will be described in detail below with reference to the drawings. The dimensional proportions of the drawings are exaggerated for illustrative purposes and may differ from the actual proportions.

### [Structure]

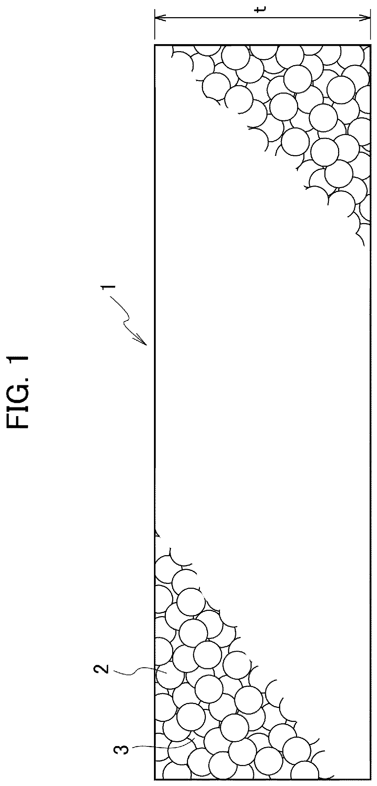

As shown in FIG. 1, a structure 1 of the present embodiment includes a plurality of crystal particles 2, and a coupling portion 3 for coupling each of the crystal particles 2. Due to the adjacent crystal particles 2 being coupled to each other, the structure 1 in which the crystal particles 2 are connected is formed. The crystal particles 2 may be in point contact with each other, or in surface contact with each other. In surface contact, surfaces of the crystal particles 2 are in contact with each other.

The crystal particles 2 contain calcium phosphate compounds. The calcium phosphate compounds contain phosphorus and calcium. Specifically, the calcium phosphate compounds are a collective term for a salt of a calcium ion (Ca²⁺), and a phosphate ion (PO₄³⁻), a phosphite ion (HPO₃²⁻), a diphosphate ion (P₂O₇⁴⁻), or a metaphosphoric acid (PO₃⁻). The calcium phosphate compounds may contain apatite, calcium monohydrogen phosphate CaH(PO₄), calcium dihydrogen phosphate (Ca(H₂PO₄)₂), tricalcium phosphate (Ca₃(PO₄)₂), Ca₁₀(PO₄)₆F₂, Ca₁₀(PO₄)₆Cl₂, dicalcium diphosphate (Ca₂P₂O₇), calcium metaphosphate (Ca(PO₃)₂), or combinations thereof.

The apatite may contain at least one selected from the group consisting of fluorapatite, chlorapatite, and hydroxyapatite. Specifically, the hydroxyapatite is expressed by a composition formula: Ca₁₀(PO₄)₆(OH)₂, for example. The apatite may be expressed by a composition formula in which a portion of Ca in the composition formula expressed by Ca₁₀(PO₄)₆(OH)₂ is replaced by an element other than Ca, such as at least one of an alkaline earth metal and lead. Further, the apatite may be expressed by a composition formula in which a portion of P in the composition formula expressed by Ca₁₀(PO₄)₆(OH)₂ is replaced by at least one selected from the group consisting of As, V, and S. Still further, the apatite may be expressed by a composition formula in which OH in the composition formula expressed by Ca₁₀(PO₄)₆(OH)₂ is replaced by at least one selected from the group consisting of F, Cl, Br, O, and CO₃.

It is preferable that the crystal particles 2 contain hydroxyapatite expressed by Ca₁₀₋ₓ(HPO₄)ₓ(PO₄)₆₋ₓ(OH)₂₋ₓ (0 ≤ x < 1). This makes the structure 1 structurally and chemically stable. Therefore, the structure 1 can be suitably used as a biomaterial or optical material, for example. Further, as described above, an ion such as fluorine can be introduced to this kind of hydroxyapatite. Therefore, it is possible to obtain a wide variety of structures 1.

It is preferable that the crystal particles 2 have apatite crystals. Apatite crystals have higher mechanical strength properties than amorphous substances. When the crystal particles 2 have apatite crystals, the strength of the crystal particles 2 increases. This can further enhance the mechanical strength of the structure 1.

The crystal particles 2 contain calcium phosphate compounds as a main component. The crystal particles 2 contain the calcium phosphate compounds as a main component mean that the crystal particles 2 contain the calcium phosphate compounds in an amount of 50% by mass or more. The crystal particles 2 may contain the calcium phosphate compounds in an amount of 60% by mass or more, in an amount of 70% by mass or more, in an amount of 80% by mass or more, in an amount of 90% by mass or more, in an amount of 95% by mass or more, or in an amount of 99% by mass or more.

The average particle size of the crystal particles 2 is 60 nm or less. Due to the average particle size being 60 nm or less, variation in the internal structure of the structure 1 is reduced, and the internal structure becomes dense. This enhances the mechanical strength and translucency of the structure 1. The average particle size is preferably 50 nm or less, and more preferably 40 nm or less. Although the lower limit of the average particle size of the crystal particles 2 is not particularly limited, the average particle size may be 1 nm or more, 5 nm or more, 10 nm or more, or 20 nm or more. Unless otherwise stated, in the present specification, "average particle size" refers to an average value of the diameter obtained by converting particles into circles and then performing the conversion. The particles are observed in several to several tens of fields using a microscope such as a scanning electron microscope (SEM) or a transmission electron microscope (TEM).

Although the shape of the crystal particles 2 is not particularly limited, the crystal particles 2 may be spherical particles or ellipsoidal particles, for example. In addition, the crystal particles 2 may be polyhedral particles including cubic particles and rectangle particles, whisker-like (needle-like) particles, or scale-like particles.

The aspect ratio of the crystal particles 2 may be 2 or less. When the aspect ratio is the above value or less, the anisotropy of the crystal particles 2 in the structure 1 may be reduced, and the translucency may be enhanced. Further, when the aspect ratio is the above value or less, the structure in the structure 1 may become dense, and the mechanical strength may be enhanced. The aspect ratio of the crystal particles 2 may be less than 1.8, less than 1.5, less than 1.3, or less than 1.2. The aspect ratio of the crystal particles 2 is the ratio of the length in a major axis direction of each crystal particle 2, to the length in a minor axis direction. The lengths in the minor axis direction and the major axis direction of each crystal particle 2 can be measured by performing observation using a microscope such as a transmission electron microscope.

The coupling portion 3 contains calcium phosphate compounds. As the phosphate compounds contained in the coupling portion 3, the calcium phosphate compounds contained in the crystal particles 2 as described above can be used.

It is preferable that the coupling portion 3 contains hydroxyapatite expressed by Ca₁₀₋ₓ(HPO₄)ₓ(PO₄)₆₋ₓ(OH)₂₋ₓ(0 ≤ x < 1). This makes the structure 1 structurally and chemically stable. Therefore, the structure 1 according to the present embodiment can be suitably used as a biomaterial, optical material, structural material, or the like, for example. Further, as described above, an ion such as fluorine can be introduced to this kind of hydroxyapatite. Therefore, it is possible to obtain a wide variety of structures 1.

The coupling portion 3 contains calcium phosphate compounds as a main component. The coupling portion 3 contains the calcium phosphate compounds as a main component means that the coupling portion 3 contains the calcium phosphate compounds in an amount of 50% by mass or more. The coupling portion 3 may contain the calcium phosphate compounds in an amount of 60% by mass or more, in an amount of 70% by mass or more, in an amount of 80% by mass or more, in an amount of 90% by mass or more, in an amount of 95% by mass or more, or in an amount of 99% by mass or more.

The calcium phosphate compounds contained in the coupling portion 3 may be the same or different from the calcium phosphate compounds contained in the crystal particles 2. It is preferable that the calcium phosphate compounds contained in the coupling portion 3 are the same as the calcium phosphate compounds contained in the crystal particles 2, because it is less likely that light is refracted at an interface between the crystal particles 2 and the coupling portion 3, and the total light transmittance of the structure 1 can be enhanced.

The refractive index difference between the crystal particles 2 and the coupling portion 3 is preferably 0.05 or less, more preferably 0.03 or less, and even more preferably 0.01 or less. By setting the refractive index difference to be the above value or less, it is possible to avoid the refraction of light at the interface between the crystal particles 2 and the coupling portion 3, and enhance the total light transmittance of the structure 1. The lower limit of the refractive index difference is not particularly limited, and the refractive index difference is 0 or more. Further, for the refractive index, it is possible to adopt a value at an NaD line (589 nm) measured using an Abbe's refractometer.

The coupling portion 3 may be an amorphous substance, a crystalline substance, or a mixture thereof. No matter what state the coupling portion 3 is in, it is preferable that the coupling portion 3 has apatite crystals. The apatite crystals have higher mechanical strength properties than amorphous substances. When the coupling portion 3 has the apatite crystals, the strength of the coupling portion 3 increases. This can further enhance the mechanical strength of the structure 1. From the viewpoint of reducing the refractive index difference between the crystal particles 2 and the coupling portion 3, it is preferable that compounds forming crystals of the coupling portion 3 are the same as compounds forming crystals of the crystal particles 2.

The amount of the crystal particles 2 in the structure 1 may be 50% by volume or more, 60% by volume or more, 70% by volume or more, or 80% by volume or more. Further, the total amount of the crystal particles 2 and the coupling portion 3 in the structure 1 may be 50% by volume or more, 70% by volume or more, 90% by volume or more, or 99% by volume or more.

The relative density of the structure 1 is 80% or more. As a result, the internal structure of the structure 1 becomes dense. Therefore, it is possible to enhance the mechanical strength of the structure 1. The relative density is preferably 90% or more. The relative density may be more than 90%, more than 93%, more than 94%, more than 95%, or more than 97%. The upper limit of the relative density is not particularly limited, and the relative density may be 100% or less. The relative density can be measured by means of methods described in example columns which will be described later.

When the thickness of the structure 1 is 1 mm, the total light transmittance of light having a wavelength of 589 nm is 45% or more. Due to the total light transmittance being the above value or more, it is possible to enhance the translucency of the structure 1. The total light transmittance may be more than 60%, more than 70%, more than 71%, more than 74%, or more than 80%. The upper limit of the total light transmittance is not particularly limited, and the total light transmittance may be 100% or less. The total light transmittance can be measured by means of methods described in example columns which will be described later.

The Vickers hardness of the structure 1 is 1 GPa or more. Due to the Vickers hardness being the above value or more, it is possible to enhance the mechanical strength of the structure 1. The Vickers hardness may be more than 2 GPa, more than 2.3 GPa, more than 3 GPa, or more than 3.5 GPa. The upper limit of the Vickers hardness is not particularly limited, and the Vickers hardness may be 10 GPa or less, for example. The Vickers hardness can be measured by means of methods described in example columns which will be described later.

The fracture toughness of the structure 1 is preferably 0.3 MPa•m^{1/2} or more. Due to the fracture toughness being the above value or more, it is possible to enhance the mechanical strength of the structure 1. The fracture toughness may be more than 0.4 MPa•m^{1/2}, more than 0.43 MPa•m^{1/2}, more than 0.47 MPa•m^{1/2}, or more than 0.56 MPa•m^{1/2}. The upper limit of the fracture toughness is not particularly limited, and the fracture toughness may be 1 MPa•m^{1/2} or less, for example. The fracture toughness can be measured by means of methods described in example columns which will be described later.

The biaxial flexural strength of the structure 1 is preferably 20 MPa or more. Due to the biaxial flexural strength being the above value or more, it is possible to enhance the mechanical strength of the structure 1. The biaxial flexural strength may be more than 25 MPa, more than 31 MPa, more than 35 MPa, or more than 38 MPa. The upper limit of the biaxial flexural strength is not particularly limited, and the biaxial flexural strength may be 100 MPa or less, for example. The biaxial flexural strength can be measured by means of methods described in example columns which will be described later.

The Young's modulus of the structure 1 is preferably 40 MPa or more. Due to the Young's modulus being the above value or more, it is possible to enhance the mechanical strength of the structure 1. The Young's modulus may be more than 50 MPa, more than 60 MPa, more than 62 MPa, more than 65 MPa, or more than 75 MPa. The Young's modulus can be measured by means of methods described in example columns which will be described later.

The structure 1 may have a pore between the adjacent crystal particles 2. The porosity at a cross section of the structure 1 is preferably 15% or less. In other words, when the cross section of the structure 1 is observed, the average value of the ratio of pores per unit area is preferably 15% or less. When the porosity is 15% or less, the ratio of the crystal particles 2 coupled to each other increases. Therefore, the structure 1 becomes dense, and it is possible to enhance the mechanical strength. Further, when the porosity is 15% or less, the occurrence of cracks in the structure 1 originating from pores is suppressed. Therefore, it becomes possible to enhance the flexural strength of the structure 1. The porosity at the cross section of the structure 1 is more preferably 10% or less, and even more preferably 5% or less. As the porosity at the cross section of the structure 1 becomes smaller, the occurrence of cracks originating from pores is suppressed. This can enhance the strength of the structure 1.

In the present specification, the porosity can be obtained as follows. First, the cross section of the structure 1 is observed, and the crystal particles 2 and pores are identified. Then, the unit area, and the area of pores in the unit area are measured, and the ratio of pores per unit area is obtained. After the ratio of pores per unit area is obtained at a plurality of locations, the average value of the ratio of pores per unit area is used as the porosity. When the cross section of the structure 1 is observed, it is possible to use an optical microscope, a scanning electron microscope (SEM), or a transmission electron microscope (TEM). Further, the unit area, and the area of pores in the unit area may be measured by binarizing an image observed using a microscope.

Although the size of pores existing inside the structure 1 is not particularly limited, it is preferable that the size of pores is as small as possible. Due to the size of pores being small, cracks originating from pores are suppressed. Therefore, it is possible to enhance the mechanical strength of the structure 1. The size of pores in the structure 1 is preferably 5 µm or less, more preferably 1 µm or less, and even more preferably 100 nm or less. Similarly to the porosity described above, the size of pores existing inside the structure 1 can be obtained by observing the cross section of the structure 1 using a microscope.

When the structure 1 has apatite crystals, a peak intensity derived from the (300) face may be higher than a peak intensity derived from the (002) face in an XRD pattern, when a CuKα line is used as an X-ray source of the structure 1. This reduces the anisotropy of the crystal particles 2. Therefore, the translucency of the structure 1 may be increased.

The shape of the structure 1 is not particularly limited, and the shape of the structure 1 may be plate-like, film-like, rectangular, massive, rod-like, or spherical, for example. Further, when the structure 1 is plate-like or film-like, the thickness t thereof is not particularly limited, but the thickness t may be 50 µm or more, for example. The structure 1 of the present embodiment is formed by means of a pressurized heating method, as will be described later. Therefore, it is possible to easily obtain the thick structure 1. The thickness t of the structure 1 may be 1 mm or more, or 1 cm or more. The upper limit of the thickness t of the structure 1 is not particularly limited, but the thickness t may be 50 cm, for example.

In this way, the structure 1 of the present embodiment includes the plurality of crystal particles 2 containing the calcium phosphate compounds, and the coupling portion 3 which couples each of the crystal particles 2 and contains the calcium phosphate compounds. The average particle size of the crystal particles 2 is 60 nm or less. The relative density of the structure 1 is 80% or more. When the thickness of the structure 1 is 1 mm, the total light transmittance of light having a wavelength of 589 nm is 45% or more. The Vickers hardness of the structure 1 is 1 GPa or more. As a result, the internal structure of the structure 1 becomes dense, and the light transmission ratio increases. Therefore, the structure 1 has excellent mechanical strength and translucency. Further, the structure 1 can be produced under low-temperature conditions as described later. Therefore, the structure 1 with low crystallinity can be obtained, compared with a structure produced under high-temperature conditions such as high-temperature sintering. Therefore, it is possible to obtain the structure 1 with high reactivity such as bioactivity. Further, the crystal particles 2 of the structure 1 according to the present embodiment are small and have the large surface area, and many hydroxy groups having infrared absorption ability remain in the structure 1, compared with a structure produced under high-temperature conditions such as high-temperature sintering. Therefore, it is possible to provide the structure 1 having infrared shielding ability.

### [Method of producing structure]

Next, a method of producing the structure 1 according to the present embodiment will be described. The method of producing the structure 1 includes a preparing step of preparing a mixture in which raw material particles containing crystals of calcium phosphate compounds is mixed with an aqueous solution containing calcium and phosphorus and having a pH of 4.0 or more, and heating and pressurizing step of heating and pressurizing the mixture.

The method of producing the structure 1 according to the present embodiment is a method using a reaction such as biomineralization, in which organisms produce minerals (inorganic compounds) in their bodies. In the method of producing the structure 1, the raw material particles and the aqueous solution are heated and pressurized to cause a reaction between the raw material particles and the aqueous solution, and the coupling portion 3 is formed on the surface of the crystal particles 2 derived from the raw material particles.

A method of preparing the raw material particles is not particularly limited, but the raw material particles can be prepared by means of a sol-gel method, for example. The raw material particles can be formed from calcium salts such as calcium nitrate tetrahydrate (Ca(NO₃)₂•4H₂O), and hydrogen phosphates such as diammonium hydrogen phosphate ((NH₄)₂HPO₄).

The raw material particles contain calcium phosphate compounds. The raw material particles may contain calcium phosphate compounds similar to those of the crystal particles 2 described above. The composition of the raw material particles is the same as that of the crystal particles 2 described above, and therefore a description thereof is omitted.

The average particle size of the raw material particles is not particularly limited, but the average particle size is 60 nm or less. Due to the average particle size of the raw material particles being within this range, it is possible to enhance the reactivity with the aqueous solution, and the coupling portion 3 can be formed easily. The average particle size is preferably 50 nm or less, and more preferably 40 nm or less. The lower limit of the average particle size is not particularly limited, but the average particle size may be 1 nm or more, 5 nm or more, 10 nm or more, or 20 nm or more. Unless otherwise stated, in the present specification, the "average particle size" refers to an average value of the diameter obtained by converting particles into circles and then performing the conversion. The particles are observed in several to several tens of fields using a microscope such as a scanning electron microscope (SEM) or a transmission electron microscope (TEM).

Although the shape of the raw material particles is not particularly limited, the raw material particles may be spherical particles or ellipsoidal particles, for example. Further, the raw material particles may be polyhedral particles including cubic particles and rectangle particles, whisker-like (needle-like) particles, or scale-like particles.

The aspect ratio of the raw material particles may be 1 or more and 10 or less. The aspect ratio of the raw material particles may be more than 1.5, more than 1.8, or more than 2. Further, the aspect ratio of the raw material particles may be less than 8, less than 5, less than 3, or less than 2.5. The aspect ratio of the raw material particles is the ratio of the length in a major axis direction of each raw material particle, to the length in a minor axis direction. The lengths in the minor axis direction and the major axis direction of each raw material particle can be measured by performing observation using a microscope such as a transmission electron microscope.

The aqueous solution may contain sodium ions (Na⁺) in an amount of less than 360 mM. This kind of aqueous solution has a composition similar to that of a generally used simulated body fluid. The aqueous solution may contain the sodium ions (Na⁺) in an amount of less than 290 mM, in an amount of less than 220 mM, or in an amount of less than 180 mM. Further, the aqueous solution may contain the sodium ions (Na⁺) in an amount of more than 40 mM, in an amount of more than 80 mM, or in an amount of more than 120 mM.

The aqueous solution may contain potassium ions (K⁺) in an amount of less than 13 mM. This kind of aqueous solution has a composition similar to that of a generally used simulated body fluid. The aqueous solution may contain the potassium ions (K⁺) in an amount of less than 10 mM, in an amount of less than 8 mM, or in an amount of less than 6 mM. Further, the aqueous solution may contain the potassium ions (K⁺) in an amount of more than 2 mM or in an amount of more than 4 mM.

The aqueous solution may contain magnesium ions (Mg²⁺) in an amount of less than 3.8 mM. This kind of aqueous solution has a composition similar to that of a generally used simulated body fluid. The aqueous solution may contain the magnesium ions (Mg²⁺) in an amount of less than 3.1 mM, in an amount of less than 2.3 mM, or in an amount of less than 1.6 mM. Further, the aqueous solution may contain the magnesium ions (Mg²⁺) in an amount of more than 0.5 mM or in an amount of more than 1.0 mM.

The aqueous solution may contain calcium ions (Ca²⁺) in an amount of more than 0.5 mM and less than 12.5 mM. This kind of aqueous solution can easily form a calcium phosphate compound. The aqueous solution may contain the calcium ions (Ca²⁺) in an amount of more than 1.0 mM, in an amount of more than 1.5 mM, or in an amount of more than 2.0 mM. Further, the aqueous solution may contain the calcium ions (Ca²⁺) in an amount of less than 10 mM, in an amount of less than 7.5 mM, in an amount of less than 5.0 mM, or in an amount of less than 3.0 mM.

The aqueous solution may contain chloride ions (Cl⁻) in an amount of less than 380 mM. This kind of aqueous solution has a composition similar to that of a generally used simulated body fluid. The aqueous solution may contain the chloride ions (Cl⁻) in an amount of less than 300 mM, in an amount of less than 240 mM, or in an amount of less than 180 mM. Further, the aqueous solution may contain the chloride ions (Cl⁻) in an amount of more than 40 mM, in an amount of more than 80 mM, or in an amount of more than 120 mM.

The aqueous solution may contain hydrogen carbonate ions (HCO³⁻) in an amount of less than 10.5 mM. This kind of aqueous solution has a composition similar to that of a generally used simulated body fluid. The aqueous solution may contain the hydrogen carbonate ions (HCO³⁻) in an amount of less than 10 mM, in an amount of less than 8 mM, or in an amount of less than 6 mM. Further, the aqueous solution may contain the hydrogen carbonate ions (HCO³⁻) in an amount of more than 2 mM or in an amount of more than 4 mM.

The aqueous solution may contain hydrogen phosphate ions (HPO₄²⁻) in an amount of more than 0.1 mM and less than 5.0 mM. This kind of aqueous solution can easily form a calcium phosphate compound. The aqueous solution may contain the hydrogen phosphate ions (HPO₄²⁻) in an amount of more than 0.3 mM, in an amount of more than 0.6 mM, or in an amount of more than 0.9 mM. Further, the aqueous solution may contain the hydrogen phosphate ions (HPO₄²⁻) in an amount of less than 4 mM, in an amount of less than 3 mM, in an amount of less than 2 mM, or in an amount of less than 1.5 mM.

The aqueous solution may contain sulfate ions (SO₄²⁻) in an amount of less than 1.25 mM. This kind of aqueous solution has a composition similar to that of a generally used simulated body fluid. The aqueous solution may contain the sulfate ions (SO₄²⁻) in an amount of less than 1 mM, in an amount of less than 0.8 mM, or in an amount of less than 0.6 mM. Further, the aqueous solution may contain the sulfate ions (SO₄²⁻) in an amount of more than 0.2 mM or in an amount of more than 0.4 mM.

A pH of the aqueous solution is 4.0 or more. Due to the pH being 4.0 or more, it is possible to accelerate a reaction by pressurization and heating. A pH of the aqueous solution may be 5 or more, or 6 or more. Further, a pH of the aqueous solution may be less than 10, less than 9, or less than 8.

The aqueous solution containing calcium and phosphorus and having a pH of 4.0 or more may be a Simulated body fluid (SBF), for example. The SBF is an aqueous solution in which inorganic ion concentration is approximately equal to concentration of a human extracellular fluid. Using the solution, it is possible to simply predict a reaction of a material surface outside of a living organism. Due to raw material particles being reacted with the SBF, it is possible to easily form calcium phosphate compounds on surfaces of the raw material particles. Therefore, it is possible to easily form the coupling portion 3 containing calcium phosphate compounds such as hydroxyapatite, for example. As the simulated body fluid, it is possible to use an aqueous solution of the above-described concentration range.

It is preferable that the amount added of the aqueous solution relative to the raw material particles is the amount in which a reaction proceeds sufficiently. The amount added of the aqueous solution relative to the raw material particles is preferably in a range from 1 to 200% by mass, and more preferably in a range from 7 to 100% by mass.

Next, a mold is filled with a mixture obtained by mixing the raw material particles with the aqueous solution. After the mixture is filled into the mold, the mold may be heated as necessary. Then, by applying pressure to the mixture in the mold, a state of the inside of the mold becomes a high-pressure state. At this time, the raw material particles are highly filled, and density increases due to the raw material particles being coupled to each other. In other words, when the mixture obtained by mixing the raw material particles with the aqueous solution is pressurized while being heated, it is considered that a reaction such as biomineralization proceeds.

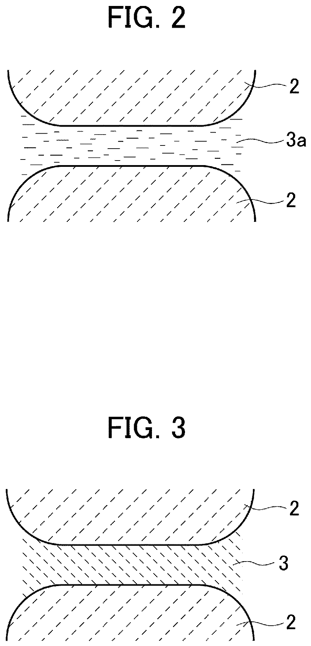

To describe in detail, as shown in FIG. 2, after raw material particles come into contact with an aqueous solution, calcium phosphate compounds are formed on surfaces of the raw material particles by calcium ions and phosphate ions. Then, as shown in FIG. 3, the coupling portion 3 containing calcium phosphate compounds is formed between adjacent raw material particles. By increasing the heating and pressurizing time of the mixture obtained by mixing the raw material particles with the aqueous solution, the formation of calcium phosphate compounds proceeds, and the ratio of calcium phosphate compounds increases. Therefore, the coupling portion 3 containing the calcium phosphate compounds can be formed by performing a step of heating and pressurizing the mixture for a predetermined time.

Heating and pressurizing conditions of the mixture obtained by mixing the raw material particles with the aqueous solution are not particularly limited, as long as the conditions are conditions in which a reaction between the raw material particles and the aqueous solution proceeds. It is preferable that the mixture obtained by mixing the raw material particles with the aqueous solution is pressurized at a pressure of 3000 MPa or less, while being heated to 40°C or higher and 300°C or lower, for example. Further, it is preferable that the heating and pressurizing time of the mixture is 20 minutes or longer and 12 hours or shorter. Due to these conditions, it is possible to easily form the coupling portion 3 containing crystalline calcium phosphate compounds. The pressure at which the mixture is pressurized may be 1 MPa or more, or 10 MPa or more. Further, the pressure at which the mixture is pressurized may be 2000 MPa or less, or 1000 MPa or less. The temperature at which the mixture is heated may be 80°C or higher, or 100°C or higher. Further, the temperature at which the mixture is heated may be 250°C or lower, or 200°C or lower.

Finally, by taking out a molded product from the inside of the mold, it is possible to obtain the structure 1 in which the plurality of crystal particles 2 are coupled to each other through the coupling portion 3. In the present embodiment, an example has been described, in which the mixture obtained by mixing the raw material particles with the aqueous solution is filled into the mold, and then heated and pressurized. However, an example is not limited to the example using this kind of mold, and the mixture may be heated and pressurized in a state where the mixture is interposed between two plates, for example.

In this way, the method of producing the structure 1 of the present embodiment includes a step of pressurizing and heating the mixture containing the raw material particles and the aqueous solution. The raw material particles have an average particle size of 60 nm or less and contain crystals of calcium phosphate compounds. The aqueous solution contains calcium and phosphorus and has a pH of 4.0 or more. In the step of pressurizing and heating the mixture, the mixture is pressurized and heated for 20 minutes or longer and 12 hours or shorter under conditions where the pressure is 3000 MPa or less, and the temperature is 300°C or lower. In this method, the structure 1 can be molded under low-temperature conditions. Therefore, the structure 1 with low crystallinity can be obtained, compared with a structure produced under high-temperature conditions such as high-temperature sintering. Therefore, it is possible to obtain the structure 1 with high reactivity such as bioactivity. Further, the crystal particles 2 of the structure 1 according to the present embodiment are small and have the large surface area, and many hydroxy groups having infrared absorption ability remain in the structure 1, compared with the structure produced under high-temperature conditions such as high-temperature sintering. Therefore, it is possible to provide the structure 1 having infrared shielding ability.

### [Member having structure]

Next, a member having the structure 1 according to the present embodiment will be described. As described above, the structure 1 of the present embodiment can be in the form of a thick plate. In addition, the structure 1 has high mechanical strength, and can be cut and surface processed, in the same manner as a general ceramic member. Therefore, the structure 1 can be suitably used as a building member, dental material, medical material, or material for basic research in biochemistry such as a cell culture vessel. The building member is not particularly limited, but examples thereof include an exterior wall material (siding), roof material, road material, and outer groove material. In addition, the structure 1 according to the present embodiment has excellent translucency. Therefore, the structure 1 can be suitably used as an optical member such as an infrared cut filter, a lens for organism, or a transmission observation window.

Further, the structure 1 of the present embodiment is similar to a bone or tooth component of an organism, and has excellent transparency. Therefore, a cell can be cultured on a surface of the structure 1. Therefore, the structure 1 can be suitably used as a material for cell culture, which enables direct evaluation of cell activity.

Further, the structure 1 of the present embodiment has excellent bioadhesive properties and transparency. Therefore, by connecting or coating the structure 1 to a percutaneous device such as a central venous catheter for feeding, it is possible to provide a medical material which enables measurement of transmitted light in an organism, while preventing bacterial infection.

The structure 1 of the present embodiment may contain various functional materials. The functional materials may be used in combination with the crystal particles 2 or the coupling portion 3. Further, since the structure 1 of the present embodiment is fabricated at a low temperature, the functional materials may be organic materials such as polymers.

When light-emitting materials such as phosphors or fluorescent dyes are combined, since translucency is high, light emitted by the light-emitting materials can be efficiently taken out, for example. Further, when an excitation source is light, the light-emitting materials can efficiently take in the excitation light. The structure 1 in which the light-emitting materials are combined can be used for lighting or a display device.

In addition, when color materials containing colorants such as biological colorants, pigments, or dyes are combined, it is possible to obtain a colored structure in which the color is exhibited with excellent reproducibility, or a translucent structure in which a transmitted wavelength is controlled. The translucency of the structure 1 can be controlled by parameters such as the particle size, refractive index, and addition amount of the color materials. These structures 1 can be used as decorative components or optical filters for sensor devices.

Further, the structure 1 can be suitably used as a material for cell culture by combining functional materials useful for cell culture and activity, such as growth factor amino acids, peptides, proteins, enzymes, serum, and plasma components useful for physiological activity.

The above-described functional materials are only examples, and it is obvious to those skilled in the art that the structure 1 having functions derived from the functional materials can be fabricated by combining various other functional materials.

### [Examples]

A more detailed description will be given below of the structure of the present embodiment by means of examples, but the present embodiment is not limited thereto.

### (Synthesis of hydroxyapatite raw material particles)

Hydroxyapatite nanoparticles were synthesized by means of a sol-gel method referring to the literature (F. Bakan et al., A novel low temperature sol-gel synthesis process for thermally stable nanocrystalline hydroxyapatite, Powder Technol., 233 (2013) 295-302.). Specifically, 100 mL of a calcium aqueous solution (5M (mol/L)) was synthesized using Ca(NO₃)₂•4H₂O (FUJIFILM Wako Pure Chemical Corporation), and a hydrogen phosphate aqueous solution (3M (mol/L)) was synthesized using (NH₄)₂HPO₄ (FUJIFILM Wako Pure Chemical Corporation). Next, the pH of each aqueous solution was adjusted to 10.5 using ammonia water (FUJIFILM Wako Pure Chemical Corporation). Then, while the hydrogen phosphate aqueous solution was added dropwise to the calcium aqueous solution, they were stirred at 300 rpm, and a mixed solution was formed. At this time, ammonia water was added such that the pH of the mixed solution was maintained at 10.5. The mixed solution was stirred for 1 hour and aged for 12 hours, and then the resulting gel was washed with ultrapure water. The washed gel was heat-treated at 110°C for 24 hours to obtain hydroxyapatite nanoparticles (raw material particles) with an average particle size of 30 nm.

### (Preparation of simulated body fluid (SBF))

An SBF was prepared by means of a known method (T. Kokubo et al., Solutions able to reproduce in vivo surface-structure changes in bioactive glass-ceramic A-W, J. Biomed. Mater. Res., 24 (1990) 721-734.). The pH of the SBF was 7.4. Table 1 shows a composition of the SBF together with a composition of human plasma.

**[Table 1]**

| Ions | Concentration/mM | |
|---|---|---|
| | Simulated body fluid | Plasma |
| Na⁺ | 142 | 142 |
| K⁺ | 5.0 | 5.0 |
| Mg²⁺ | 1.5 | 1.5 |
| Ca²⁺ | 2.5 | 2.5 |
| Cl | 148 | 103 |
| HCO³⁻ | 4.2 | 27.0 |
| HPO₄²⁻ | 1.0 | 1.0 |
| SO₄²⁻ | 0.5 | 0.5 |

### (Fabrication of structure)

### (Example 1)

0.4 g of raw material particles and 0.08 mL of an SBF were mixed using a mortar such that the amount of the SBF was 20% by mass. Then, the mixture was put into a cemented carbide mold having a 12 mm diameter, and heated while being pressurized at 180°C and 800 MPa for 30 minutes. A sample taken out from the mold was dried in an oven at 110°C for 24 hours in order to evaporate residual water. The structure according to the present example was fabricated in this way.

### (Example 2)

A structure was fabricated in the same manner as in Example 1, except that the pressurizing and heating time was changed from 30 minutes to 1 hour.

### (Example 3)

A structure was fabricated in the same manner as in Example 1, except that the pressurizing and heating time was changed from 30 minutes to 2 hours.

### (Example 4)

A structure was fabricated in the same manner as in Example 1, except that the pressurizing and heating time was changed from 30 minutes to 6 hours.

### (Comparative Example)

A structure was fabricated in the same manner as in Example 1, except that the SBF was changed to ultrapure water.

### [Evaluation]

### (Relative density measurement)

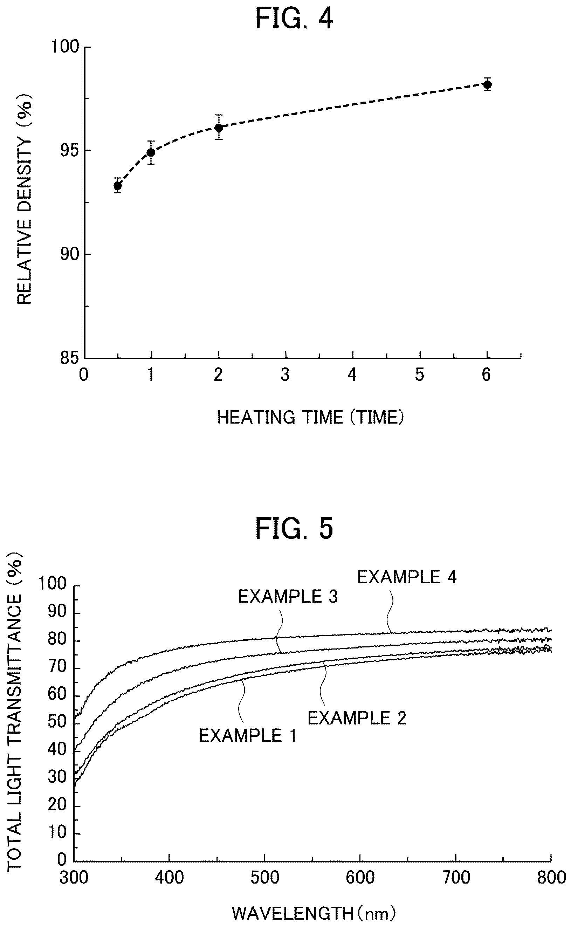

The relative density of a structure was calculated by means of the Archimedes method in which ethanol (EtOH, 99.5%, FUJIFILM Wako Pure Chemical Corporation) was used as a solvent. Table 2 and FIG. 4 show the results.

### (Total light transmittance)

Mirror polishing was performed on a structure, until the thickness became 1 mm. The total light transmittance in a wavelength region from 300 to 800 nm was measured using an integrating sphere unit used in an ultraviolet and visible spectrophotometer (UV-2600) manufactured by SHIMADZU CORPORATION. FIG. 5 shows the results. Table 2 shows the total light transmittance of a wavelength of 589 nm.

### (Vickers hardness measurement)

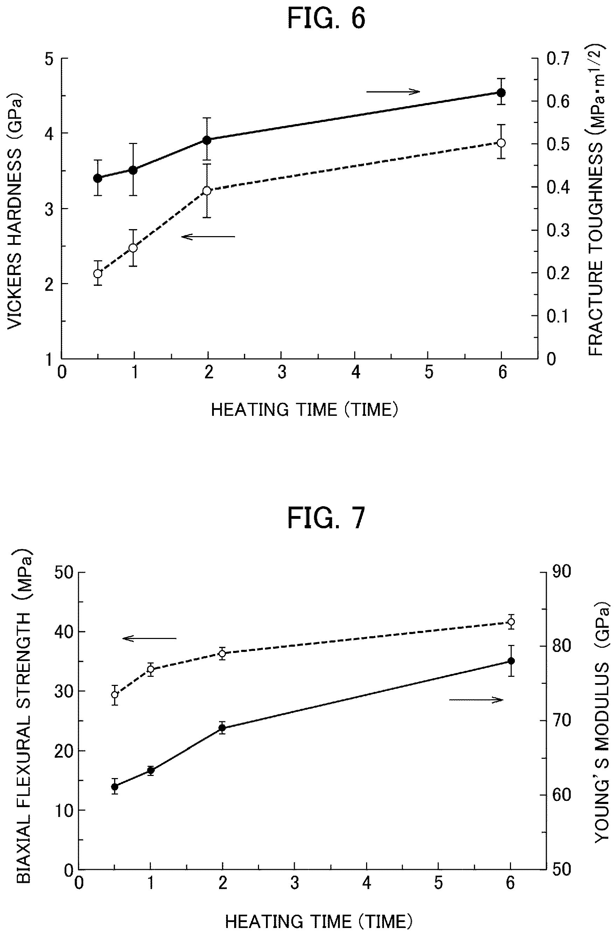

The test was performed 6 times for a structure under conditions where a load (test force) was 19.8 N and a holding time was 15 seconds. The average value thereof was used as the Vickers hardness of each structure. The Vickers hardness was measured using a Vickers hardness tester FV-310e manufactured by FUTURE-TECH CORP. Table 2 and FIG. 6 show the results.

### (Fracture toughness)

The test was performed under the same conditions as the Vickers hardness test, and the fracture toughness was calculated by means of an indentation-fracture method (IF method) based on the test results. Table 2 and FIG. 6 show the results.

### (Biaxial flexural strength)

The biaxial flexural strength was measured using an AUTOGRAPH AGX-V series universal testing machine (SHIMADZU CORPORATION) which can measure a load of 50 N. Specifically, a circular test piece with a diameter of 11 mm was supported by three spherical balls (diameter: 4.5 mm) arranged at 120 degrees intervals, and a load was applied to the center of the test piece using a loading piston with a diameter of 1.4 mm and a flat end surface. At that time, the test was performed 5 times at a constant crosshead displacement speed (0.5 mm/s), and the average value of the measured results was calculated. Table 2 and FIG. 7 show the results.

### (Young's modulus)

The Young's modulus was calculated based on ultrasonic velocity data obtained using a digital storage oscilloscope (DSOX3052T, Keysight Technologies), and an ultrasonic pulser/receiver (Model 5072, PANAMETRICS). Table 2 and FIG. 7 show the results.

**[Table 2]**

| | Heating time (h) | Relative density (%) | Transmi ttance (%) | Mechanical properties | | | |
|---|---|---|---|---|---|---|---|
| | | | | Vickers hardness (GPa) | Fracture toughness (MPa▪m^{1/2}) | Biaxial flexural strength (MPa) | Young's modulus (GPa) |
| Example 1 | 0.5 | 93.3 | 70.2 | 2.13 ± 0.16 | 0.42 ± 0.04 | 29.41 ± 1.64 | 61.27 ± 1.03 |
| Example 2 | 1.0 | 94.9 | 72.4 | 2.47 ± 0.25 | 0.44 ± 0.06 | 33.72 ± 1.18 | 63.43 ± 0.63 |
| Example 3 | 2.0 | 96.1 | 76.7 | 3.23 ± 0.36 | 0.51 ± 0.05 | 36.39 ± 1.09 | 69.09 ± 0.83 |
| Example 4 | 6.0 | 98.2 | 81.6 | 3.88 ± 0.22 | 0.62 ± 0.03 | 41.69 ± 1.23 | 78.1 ± 2.04 |

As shown in Table 2 and FIGS. 4 to 7, the relative density, transmittance, and mechanical properties of the structure increased, as the heating time of the mixture became long. As the heating time of the mixture became long, the structure became denser, and it was estimated that the mechanical strength and translucency increased.

### (Observation using scanning electron microscope)

A fractured section of a transparent structure was observed using a scanning electron microscope (FE-SEM, SU9000, Hitachi High-Tech Corporation) at an acceleration voltage of 15 kV or 30 kV.

### (Observation using transmission electron microscope (TEM))

The shape of crystal particles of a structure was observed using a transmission electron microscope (JEM-ARM200F, JEOL Ltd.).

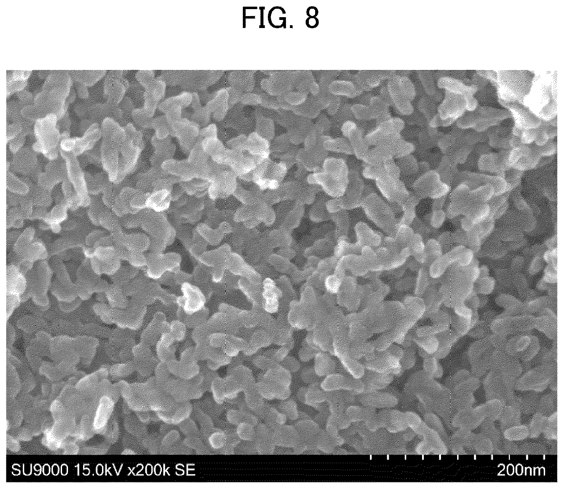

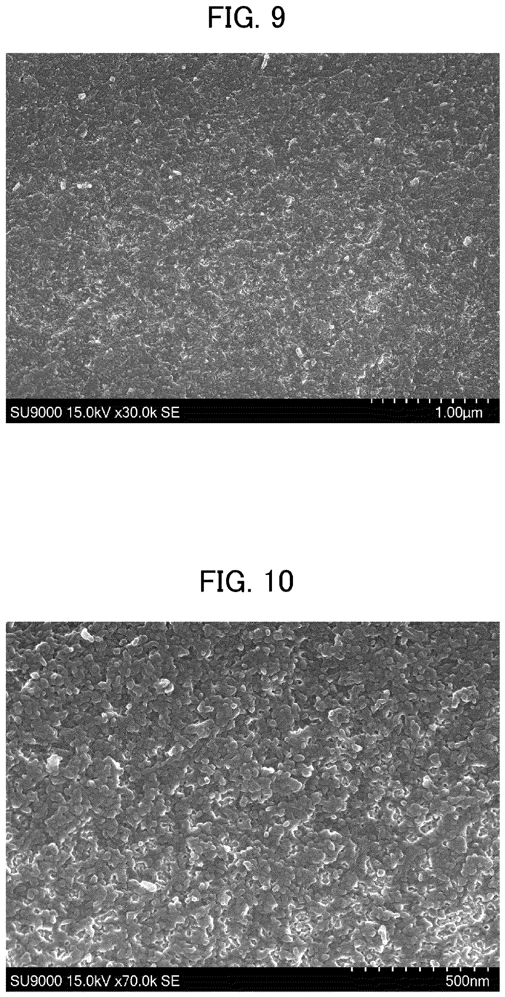

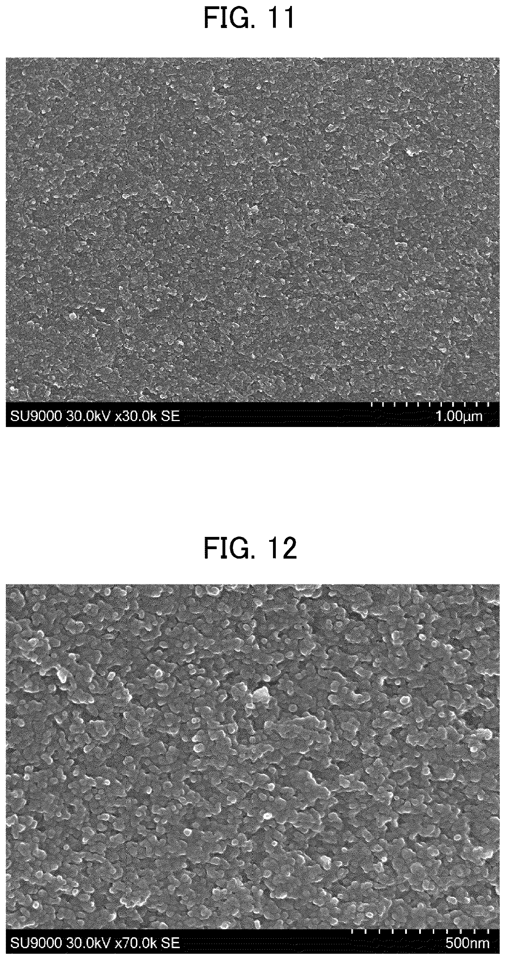

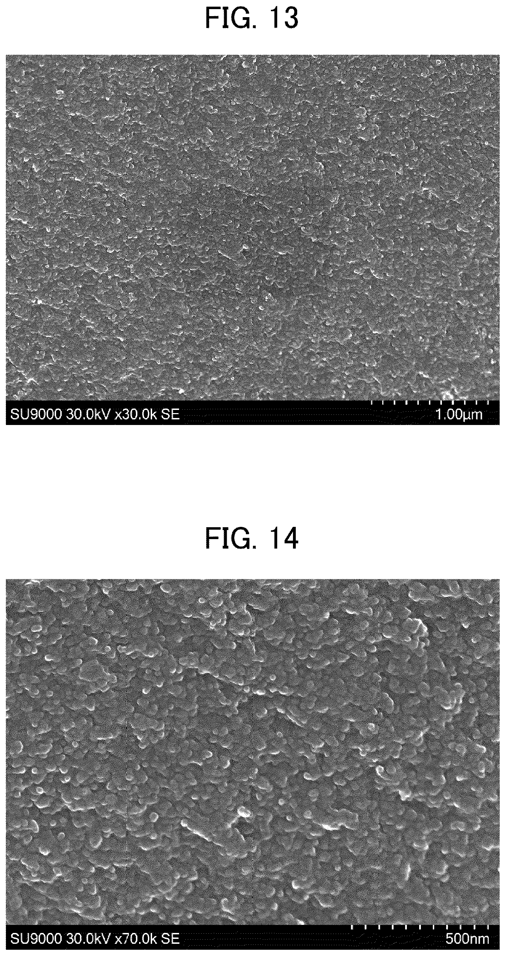

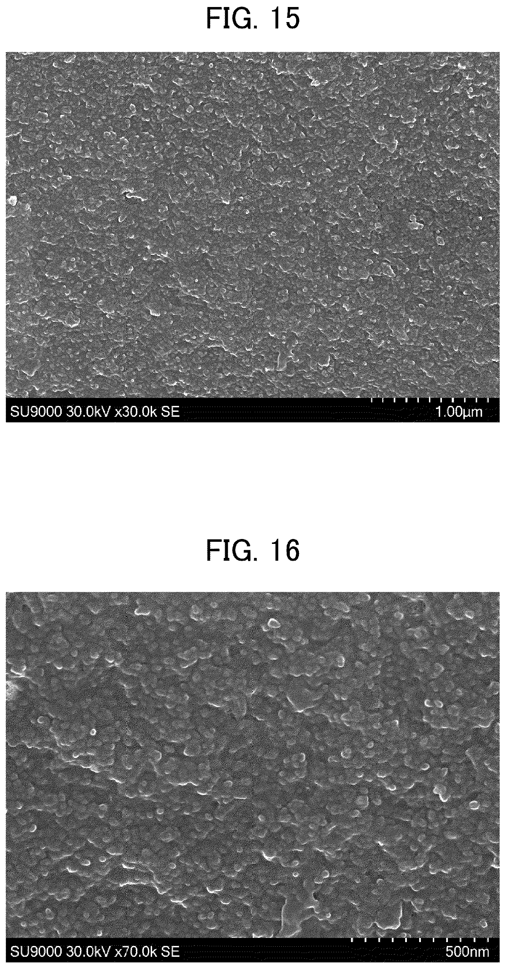

FIG. 8 shows an SEM image of raw material particles. FIGS. 9 and 10 show SEM images in which a cross section of the structure according to Example 1 was observed at a magnification of 30,000 and 70,000. FIGS. 11 and 12 show SEM images in which a cross section of the structure according to Example 2 was observed at a magnification of 30,000 and 70,000. FIGS. 13 and 14 show SEM images in which a cross section of the structure according to Example 3 was observed at a magnification of 30,000 and 70,000. FIGS. 15 and 16 show SEM images in which a cross section of the structure according to Example 4 was observed at a magnification of 30,000 and 70,000. From FIGS. 8 to 16, it can be seen that, as the heating time of raw material particles became long, the structure became denser, and the ratio of pores decreased.

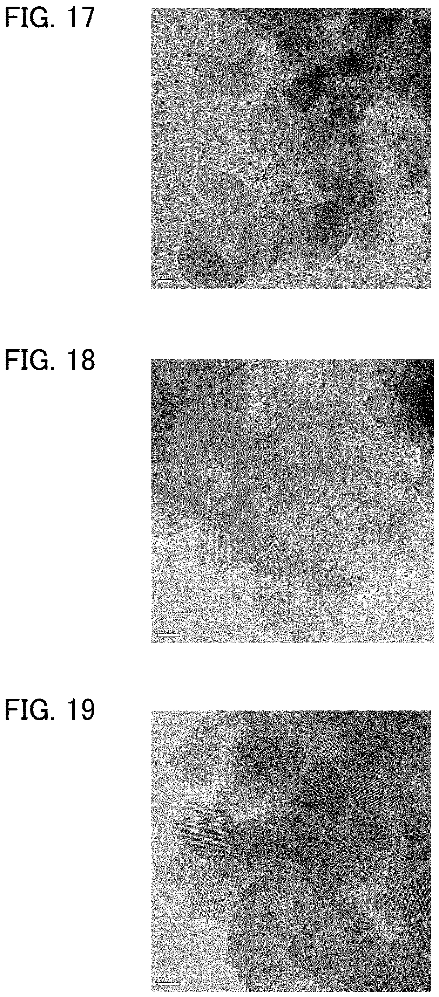

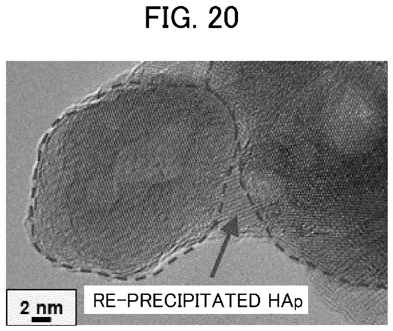

FIG. 17 shows a TEM image of raw material particles. FIG. 18 shows a TEM image obtained by observing the shape of crystal particles of the structure according to Example 1. FIG. 19 shows a TEM image obtained by observing the shape of crystal particles of the structure according to Example 4. FIG. 20 shows a TEM image in which a cross section of the structure according to Example 4 is observed by further magnifying the cross section. From FIGS. 17 to 20, it can be seen that as the heating time of raw material particles becomes long, the coupling between hydroxyapatite particles is accelerated, and ellipsoidal raw material particles become spherical. In addition, it can be confirmed from FIG. 20 that re-precipitated hydroxyapatite is formed as a coupling portion between raw material particles.

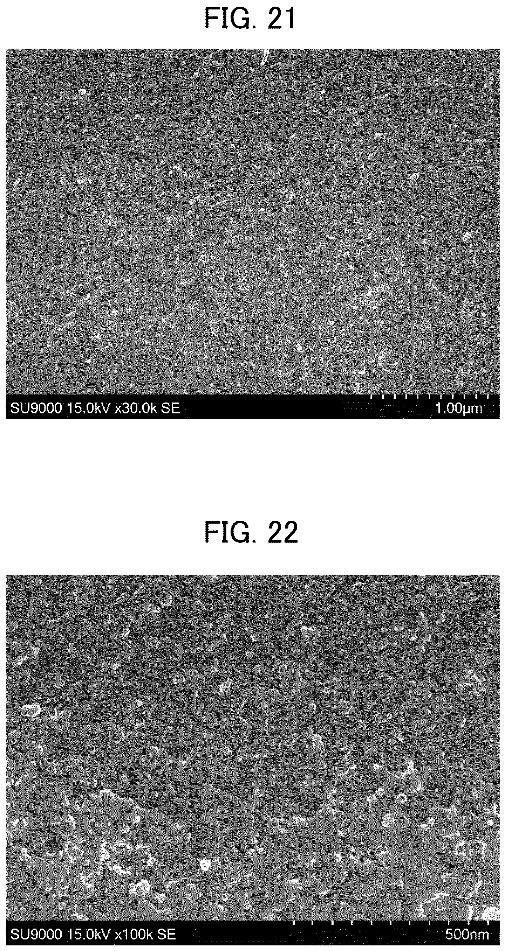

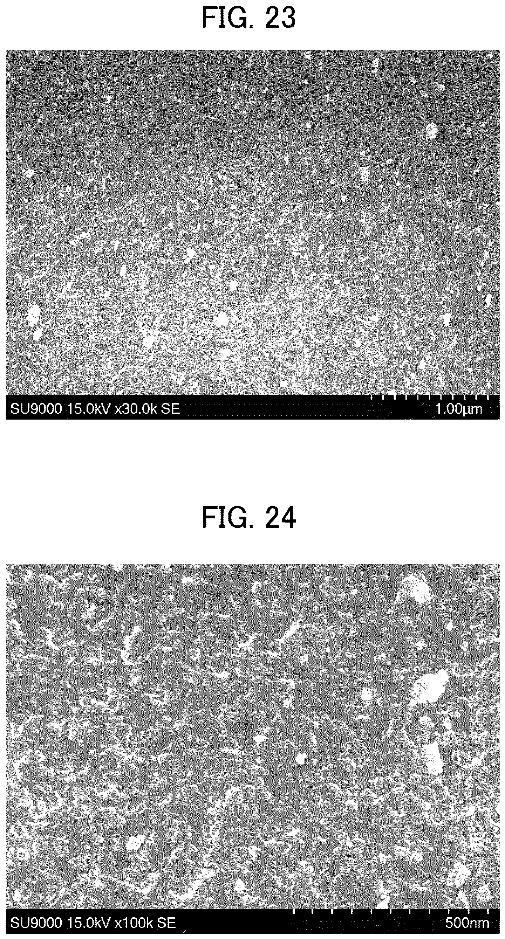

Next, SEM images of the structure according to Example 1 and the structure according to the comparative example were observed. FIGS. 21 and 22 show SEM images in which a cross section of the structure according to Example 1 was observed at a magnification of 30,000 and 100,000. FIGS. 23 and 24 show SEM images in which a cross section of the structure according to the comparative example was observed at a magnification of 30,000 and 100,000. From FIGS. 21 to 24, it was confirmed that the structure according to Example 1 had a dense structure, but a structure according to the comparative example was not as dense as a structure in the structure of Example 1.

Next, the relative density and transmittance of the structure according to the comparative example were measured. Table 3 shows the evaluation results of the comparative example together with the evaluation results of Example 1 described above. As shown in Table 3, the measured relative density of Comparative Example 1 was 87.2%, and the measured total light transmittance of a wavelength of 589 nm was 43.7%. These results reveal that, when the aqueous solution containing calcium and phosphorus and having a pH of 4.0 or more is used as a liquid to be mixed with raw material particles, the relative density and transmittance of the structure become higher, and the mechanical strength and translucency of the structure are enhanced, compared to when ultrapure water is used.

**[Table 3]**

| | Relative density (%) | Transmittance (%) |
|---|---|---|
| Example 1 | 93.3 | 70.2 |
| Comparative Example | 87.2 | 43.7 |

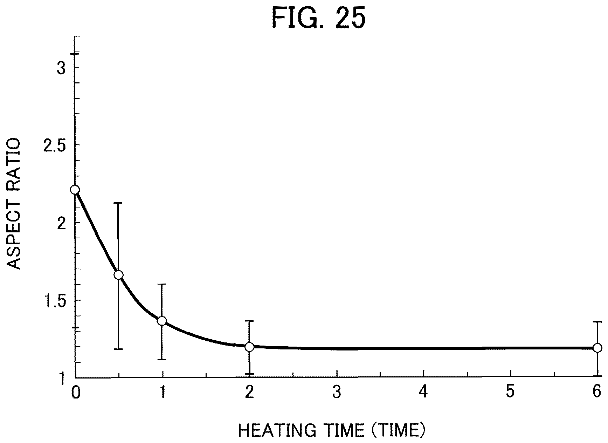

Next, the aspect ratios of raw material particles and the structures according to Examples 1 to 4 were measured. Table 4 and FIG. 25 show the results. As shown in Table 4 and FIG. 25, it was confirmed that, as the heating time of raw material particles became long, the aspect ratio of hydroxyapatite particles decreased and became close to 1, and the elongated shape of particles became closer to the spherical shape.

**[Table 4]**

| | Heating time (h) | Aspect ratio |
|---|---|---|
| Raw material particles | 0 | 2.21 ± 0.88 |
| Example 1 | 0.5 | 1.65 ± 0.47 |
| Example 2 | 1.0 | 1.36 ± 0.25 |
| Example 3 | 2.0 | 1.20 ± 0.17 |
| Example 4 | 6.0 | 1.18 ± 0.18 |

### (X-ray diffraction measurement)

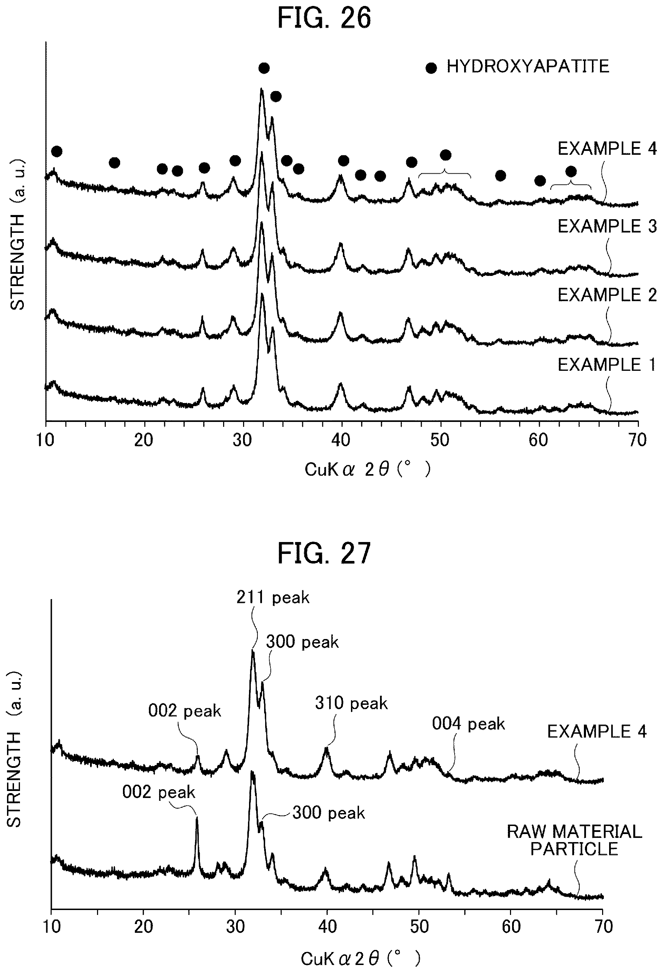

Next, X-ray diffraction patterns of structures were measured using an X-ray diffractometer. As the X-ray diffractometer, a Bruker AXS X-ray diffractometer D8 ADVANCE was used. A CuKα line was used as an X-ray source. X-ray diffraction patterns were measured under the following conditions: a tube voltage was 40 kV, a tube current was 40 mA, a diffraction angle 20 was 10 degrees to 70 degrees, and step size was 0.02 degrees. FIG. 26 shows X-ray diffraction patterns of Examples 1 to 4. FIG. 27 shows X-ray diffraction patterns of raw material particles and Example 4.

As shown in FIG. 26, diffraction peaks derived from pure hydroxyapatite were observed in the structures of Examples 1 to 4, but there was no significant difference in XRD spectra. Meanwhile, FIG. 27 shows that, by heating raw material particles, peak intensities of crystal faces (002) and (004) related to c-axis decreased, and peak intensities of crystal faces (300) and (310) related to a-axis increased. The results were different from those of the conventional Cold Sintering Process (Hassan et. al., J. Hazard. Mater., vol. 374, 2019, 228-237) and Hot Isotactic pressing (Uematsu et. al., J. Am. Ceram. Soc., vol. 72, 1989, 1476-1478). FIG. 27 shows that the length of raw material particles in the major axis direction decreased, and the length in the minor axis direction increased with increasing heating time of raw material particles.

From the above results, it is considered that when raw material particles were heated and pressurized, the raw material particles were coupled to each other through a coupling portion, with increasing heating time, raw material particles became shorter in the major axis direction and longer in the minor axis direction, and this accelerated densification of a structure.

### (Supplementary notes)

By the above description of the embodiment, the following techniques are disclosed.

(Technique 1) A structure including: a plurality of crystal particles including a calcium phosphate compound; and a coupling portion that couples each of the crystal particles and includes a calcium phosphate compound, in which an average particle size of the crystal particles is 60 nm or less, a relative density of the structure is 80% or more, when a thickness of the structure is 1 mm, a total light transmittance of light having a wavelength of 589 nm is 45% or more, and a Vickers hardness of the structure is 1 GPa or more.

Due to the configuration, the internal structure of the structure becomes dense, and the light transmittance ratio increases. Therefore, it is possible to provide the structure having excellent mechanical strength and translucency.

(Technique 2) The structure according to Technique 1, in which the crystal particles include an apatite crystal. Due to the configuration, the strength of the crystal particles increases. This can further enhance the mechanical strength of the structure.

(Technique 3) The structure according to Technique 1 or 2, in which the coupling portion includes an apatite crystal. Due to the configuration, the strength of the coupling portion increases. This can further enhance the mechanical strength of the structure.

(Technique 4) The structure according to any one of Techniques 1 to 3, in which the crystal particles include hydroxyapatite expressed by Ca₁₀₋ₓ(HPO₄)ₓ(PO₄)₆₋ₓ(OH)₂₋ₓ(0 ≤ x < 1). This configuration makes the structure structurally and chemically stable. Therefore, the structure can be suitably used as a biomaterial or optical material, for example.

(Technique 5) The structure according to any one of Techniques 1 to 4, in which the coupling portion includes hydroxyapatite expressed by Ca₁₀₋ₓ(HPO₄)ₓ(PO₄)₆₋ₓ(OH)₂₋ₓ(0 ≤ x < 1). This structure makes the structure structurally and chemically stable. Therefore, the structure can be suitably used as a biomaterial or optical material, for example.

(Technique 6) The structure according to any one of Techniques 2 to 5, in which a peak intensity derived from a (300) face is higher than a peak intensity derived from a (002) face in an XRD pattern when a CuKα line is used as an X-ray source. This configuration reduces the anisotropy of crystal particles. Therefore, the translucency of the structure may be increased.

(Technique 7) The structure according to any one of Techniques 1 to 6, in which the relative density is 90% or more.

Due to the configuration, the internal structure of the structure 1 becomes more dense. This can further enhance the mechanical strength of the structure 1.

(Technique 8) A method of producing a structure including: a step of pressurizing and heating a mixture for 20 minutes or longer and 12 hours or shorter under conditions where a pressure is 3000 MPa or less, and a temperature is 300°C or lower, the mixture containing a raw material particle having an average particle size of 60 nm or less and containing a crystal of a calcium phosphate compound, and an aqueous solution containing calcium and phosphorus and having a pH of 4.0 or more, in which a relative density of the structure is 80% or more, when a thickness of the structure is 1 mm, a total light transmittance of light having a wavelength of 589 nm is 45% or more, and a Vickers hardness of the structure is 1 GPa or more. Due to the configuration, the structure can be molded under low-temperature conditions. Therefore, it is possible to obtain a structure with high reactivity such as bioactivity, a structure with high biocompatibility, a structure with visible light transmittance, or a structure with infrared shielding ability.

(Technique 9) The method of producing a structure according to Technique 8, in which the aqueous solution is a simulated body fluid. Due to the configuration, it is possible to easily form calcium phosphate compounds on surfaces of raw material particles. Therefore, it is possible to easily form the coupling portion containing calcium phosphate compounds.

The entire contents of Japanese Patent Application No. 2023-027739 (filed on: February 24, 2023) are incorporated herein by reference.

Although the contents of the present embodiment have been described above in accordance with examples, it is obvious to those skilled in the art that the present embodiment is not limited to the descriptions thereof and that various modifications and improvements are possible.

### INDUSTRIAL APPLICABILITY

According to the present disclosure, it is possible to provide a structure having excellent mechanical strength and translucency, and a method of producing a structure which can be produced under low-temperature conditions.

### REFERENCE SIGNS LIST

- 1: Structure
- 2: Crystal particle
- 3: Coupling portion
- 3a: Aqueous solution

## Claims

1. A structure comprising:
a plurality of crystal particles including a calcium phosphate compound; and
a coupling portion that couples each of the crystal particles and includes a calcium phosphate compound, wherein
an average particle size of the crystal particles is 60 nm or less,
a relative density of the structure is 80% or more,
when a thickness of the structure is 1 mm, a total light transmittance of light having a wavelength of 589 nm is 45% or more, and
a Vickers hardness of the structure is 1 GPa or more.

2. The structure according to claim 1, wherein
the crystal particles include an apatite crystal.

3. The structure according to claim 1 or 2, wherein
the coupling portion includes an apatite crystal.

4. The structure according to any one of claims 1 to 3, wherein
the crystal particles include hydroxyapatite expressed by Ca₁₀₋ₓ(HPO₄)ₓ(PO₄)₆₋ₓ(OH)₂₋ₓ(0 ≤ x < 1).

5. The structure according to any one of claims 1 to 4, wherein
the coupling portion includes hydroxyapatite expressed by Ca₁₀₋ₓ(HPO₄)ₓ(PO₄)₆₋ₓ(OH)₂₋ₓ(0 ≤ x < 1).

6. The structure according to any one of claims 2 to 5, wherein
a peak intensity derived from a (300) face is higher than a peak intensity derived from a (002) face in an XRD pattern when a CuKα line is used as an X-ray source.

7. The structure according to any one of claims 1 to 6, wherein
the relative density is 90% or more.

8. A method of producing a structure comprising:
a step of pressurizing and heating a mixture for 20 minutes or longer and 12 hours or shorter under conditions where a pressure is 3000 MPa or less, and a temperature is 300°C or lower, the mixture containing a raw material particle having an average particle size of 60 nm or less and containing a crystal of a calcium phosphate compound, and an aqueous solution containing calcium and phosphorus and having a pH of 4.0 or more, wherein
a relative density of the structure is 80% or more,
when a thickness of the structure is 1 mm, a total light transmittance of light having a wavelength of 589 nm is 45% or more, and
a Vickers hardness of the structure is 1 GPa or more.

9. The method of producing a structure according to claim 8, wherein
the aqueous solution is a simulated body fluid.
